# NEW EUROPEAN PATENT SPECIFICATION

(11) **EP 1 170 472 B2**
(45) Date of publication and mention of the opposition decision: **15.05.2013**
(45) Mention of the grant of the patent: 12.09.2007
(21) Application number: 01660135.3
(22) Date of filing: 03.07.2001
(51) Int. Cl.: F01N 3/08

(54) **System and method for purifying exhaust gases**
Vorrichtung und Verfahren zur Abgasreinigung
Dispositif et procédé d'épuration de gaz d'échappement

(30) Priority: 05.07.2000 FI 20001608
(43) Date of publication of application: 09.01.2002
(73) Proprietor: ECOCAT OY, 41331 Vihtavuori (FI)
(72) Inventor: Maunula, Teuvo, 90100 Oulu (FI)
(74) Representative: Teipel, Stephan

(56) References cited:
- EP-A- 0 417 412
- EP-A- 0 625 633
- EP-A- 0 859 132
- EP-A- 0 984 146
- EP-A- 1 154 130
- WO-A-00/21647
- WO-A-01/56686
- DE-A- 19 626 837
- DE-A- 19 850 757
- JP-A- 6 159 037
- US-A- 5 388 406

## Description

The present invention is directed to a method for purifying exhaust gases from engines under heterogeneous conditions.

Lean mixture engine (λ > 1, excessive oxygen content) was initially used in all heavy vehicles (trucks, locomotive engines, ships) and power plants since it allows for the production of the motive power with a clearly higher efficiency than e.g. the gasoline motor that has been the best solution in small power demanding engines. Limited fossile fuel supplies, CO₂ emission objectives and rising fuel prices have also directed the development of engines by manufacturers. Recently, diesel and gasoline engine types based on direct fuel injection were introduced on the market. These engine types are competitive with respect to their efficiencies and driving qualities compared to conventional gasoline driven cars using stoichiometric or rich (λ ≤ 1, stoichiometric or deficient oxygen content) fuel combustion conditions. Traditionally, particle emissions of diesel engines are higher than those of gasoline driven cars. However, very low raw emissions are already attained in modern diesel-engined cars using engine technology. Raw emissions of novel diesel engines (TDI, HDI) have clearly lower hydrocarbon (HC), carbon monoxide (CO), and NOₓ contents than those of gasoline driven cars. Allowable emission limits are lowered according to an already existing schedule, reducing the amounts of particles and NOₓ to half from the present level before the year 2005: particle limit being 0.025 g/km and NOₓ limit being 0.25 g/km. For passenger cars, driving cycles attach greater importance to city driving, and for trucks, to highway driving according to the typical use of these vehicles. For buses, more driving cycles simulating city driving are also used.

Gaseous emissions (HC, CO) may easily be purified with conversions of above 70 % in a proper oxidation catalyst containing Pt or Pd, however, the temperatures of exhaust gases decreasing with the increasing efficiency of the engine. For this reason, the catalysts are often placed as close to the engine as possible (CC = Closed Coupled) instead of placing them under the floor (UF = under Floor). Temperature difference between different locations may be over 30 to 50 °C. For passenger cars, the temperature of the exhaust gas immediately downstream of the diesel engine is normally 150 to 250 °C and 250 to 350 °C in city driving and highway driving, respectively. Sometimes for reasons relative to the temperature and space, a small so-called starting catalyst is placed in CC position and a larger main catalyst in UF position.

In modern passenger cars and trucks, especially the removal of NOₓ and particle emissions is difficult with conventional catalysts but, however, these emissions should be reduced further. In these particles, adsorbing gaseous hycrocarbons may be oxidized, but solid soot and inorganic compounds hardly react in the catalyst. In a three-way catalyst, HC, CO and NOₓ react simultaneously to form harmless compounds, but the use of such a catalyst needs stoichiometric conditions and requires again a traditional gasoline engine. Since the operating principle and the fuel of a diesel engine differ from those of a gasoline engine, a diesel engine may not be continuously used in stoichiometric or rich conditions. As gasoline engines using direct injection and excess of oxygen become more common, the compositions of the gasoline and diesel engine emissions gain similarity. In fact, lean mixture gasoline exhaust gases have considerably higher soot emissions than conventional gasoline engines. Not only the emissions, but also the qualities of the fuel and the engine will be regulated in future more strictly in Europe, United States, and in Japan. This means for instance that the sulfur content in gasoline and diesel fuel is limited to the same value of 50 ppm after the year 2005. Other countries will adopt these regulations with delay.

The reduction of nitrogen oxides in the catalyst is enhanced by injecting fuel or a reducing agent into exhaust pipe or cylinder, but the selectivity (20 to 30 % NOₓ conversion) and the stability of the catalysts are too low.

For filtering and burning of soot in diesel exhaust gases, various filters and alternatives to regenerate them have been developed: flame burners, electrical heating and additives containing catalyst in the fuel or particle trap. Particle separators must be freed from the accumulated particles regularly. A temperature of above 600 °C is needed for the termal burning of soot particles in air. Is is desirable that any inorganic compounds pass through the catalyst system unconverted. Sulfates originate from the sulfur in fuel and lubricant undergoing oxidation to give SO₂ and SO₃ forming the sulfate in the catalyst and particles. The formation of sulfates may be reduced by using low sulfur fuel or a catalyst that causes a minimal oxidation of SO₂ to SO₃. In addition, sulfates on the surface of the soot increase the weight of the particles by accumulating water on their surface and compounds absorbed in water.

Also a regenerable method for filtering particles is known, but this method uses two parallel lines and a very complicated control system (EP 0703 352 A3).

A method for the oxidation of soot in the filter (CRT = Continuous Regenerated Trap) is presented in US 4 902 487. In this method, the NO₂ being formed in the upstream Pt oxidation catalyst oxidizes soot in the downstream filter at low temperatures. Particle separators are widely used and the structures and materials thereof are being developed to endure demanding automobile applications. Separating capacity may easily be over 80 to 90 %, but hardly any reduction is achieved for nitrogen oxides. A drawback is also the formation of high amounts of NO₂ with sharp odour, being a more severe health hazard near the emission source than NO. The use of urea SCR catalyst (SCR = Selective Catalytic Reduction) downstream of the Pt oxidation catalyst and particle trap has been proposed (Automobile Engineering 25(2000), no. 5, pages 73-77), but in this case a separate expensive apparatus requiring a control system and urea container of its own is necessary, which apparatus may not be used at temperatures below 250 °C.

One solution is to use a system of two honeycomb catalysts, the cell density in the first catalyst being smaller than that in the latter catalyst to prevent the cloging of the catalyst cells (EP 0 875 667 A2). In such solutions it is preferable to increase the residence time of soot in conditions that allow for the burning thereof, but approximately only less than 50 % of the particles are removed. This degree of removal greatly depends on flow rates and temperatures in a system containing only honeycombstructures.

It is known to remove nitrogen oxides in direct injection gasoline automobile applications (GDI = gasoline direct injection) with NOₓ trap catalysts, the operation of which is based on the variation of the conditions in a controlled way between lean and rich. NOₓ compounds may then be absorbed into compounds particularly developed to this end during the longer lasting lean phase and undergo reduction to form nitrogen during the rich or stoichiometric peak. Typically, the lean phase is more than 30 times longer than the rich phase. In this manner it is possible to cut down fuel consumption, the mixture still being on an average clearly lean, and at the same time more than 70 % of nitrogen oxide emissions are removed (EP 0 560 991). Typical compounds absorbing NOₓ in Pt catalysts are for instance Ba, Sr, K, Na, Li, Cs, La and Y. In case of gasoline engines, enrichment may be carried out easily, the drawbacks being the poor sulfur resistance of the catalysts and a higher fuel consumption due to enrichments. Best operation of a diesel engine is achieved with a clearly lean fuel-air mixture, but engine tests have shown that enrichments and NOₓ catalysts are also useful for the purification of diesel exhaust gases (Krämer et al., 1999, in the seminar "Abgasnachbehandlung von Fahrzeugdieselmotoren", 15. - 16. of June, 1991, Haus der Technik, Aachen).

It is known (EP 0 859 132A) a system including a combination of three operational units being an oxidation catalyst effective to promote oxidation of at least NO to NO₂, a particle separator, and an NOₓ adsorption catalyst, whereby in said system: the order in said combination of the three operational units, in flow direction of the exhaust gas is as follows: said NOₓ adsorption catalyst is arranged in the same structure with said oxidation catalyst; and in that said system: a mixing ratio of the engine is periodically adjusted from a lean mixing ratio with a lambda value below 1.2. this system reducing the amounts of nitrogen oxides and particles present in exhaust gas.

JP 6159037 discloses a method for purifying exhaust gases of diesel engines according to the precharacterizing part of claim 1.

The object of the present invention is to provide an alternative method for the effective removal of particles and NOₓ.

The invention is achieved by a method for purifying exhaust gases according to the precharacterizing part of claim 1, wherein a mixing ratio to the engine is periodically adjusted from a lean mixing ratio to a mere stoichiometric mixing ratio with a J value below 1.2.

The invention is useful in diesel, lean gasoline and flue gas applications in mobile or stationary targets. Engines may be of freely breathing or turbocharged types, and the fuel feed may be achieved with direct injection both in diesel and in gasoline driven cars. Systems may also be used in other engines or for fuels, wherein the conditions may be controlled as described below.

The system has three operational units, comprising one or several oxidation catalysts, one or several particle separators and one or several NOₓ adsorption catalysts.

Thus the invention makes use of a system for purifying exhaust gases of diesel or gasoline engines containing on average an excess of oxygen, this system including three operational units that are an oxidation catalyst, particle separator and NOₓ adsorption catalyst, and this system reducing hydrocarbons, carbon monoxide, nitrogen oxides and particles present in exhaust gas.

The order of the operational units in flow direction of the exhaust gas is NOₓ adsorption catalyst, particle separator and an oxidation catalyst.

The system may include NOₓ adsorption catalysts that are arranged in each of the exhaust gas discharge lines of the cylinders or in each of the exhaust gas discharge lines of two cylinders. This system is particularly suitable for lean gasoline applications (GDI).

According to the invention, the purification of exhaust gas is carried out in heterogenous conditions such that the regeneration of the NOₓ adsorption catalyst sulfates, the reduction of nitrates and burning of particles is accomplished by periodically using a lean mixture and a rich mixture. The ratio of the duration of the lean phase to that of the rich phase is preferably more than 3, particularly preferably more than 10. The duration of and the mixing ratio in the rich and lean phases may vary in different cases and for different purposes.

In the enrichment phase, several simultaneous advantages may be attained by using heterogenous conditions, i.e. the reduction of nitrates, the regeneration of S and the temperature increase due to the enrichment contributes to particle burning and the regeneration of S.

The NOₓ adsorption catalyst contains as a catalytic metal platinum and/or rhodium and at least one of the following elements: Ba, Sr, La, Y, Ce, Zr, and possibly at least one of the following elements: Li, Na, K, Rb, Cs, Be, Mg, Ca. Said elements may be in the form of an oxide, sulfate, nitrate, aluminate or metal. They are preferably in the form of an oxide.

Said oxidation catalyst contains as a catalytic metal platinum and/or palladium.

Preferred supporting materials in the oxidation catalyst and NOₓ adsorption catalyst are materials that mainly contain at least one of the following oxides: alumina, zeolite, aluminiumsilicate, silica and titania.

The invention provides a method according to claims 1 to 12.

Preferably, the invention provides a method for purifying exhaust gases of diesel or gasoline engines containing on average an excess of oxygen, wherein the exhaust gases to be purified are passed over an NOₓ adsorption catalyst that allows for the regeneration of sulfates with a lean-rich mixture, the ratio of the duration of the lean phase to that of the rich phase being more than 3, preferably more than 10.

According to the invention, enrichments with variable durations may be used for the regeneration of nitrates, sulfates and particles such that the regenerations of sulfates and particles preferably last longer than the regeneration of nitrates.

Still further, the invention provides a method for purifying exhaust gases of diesel or gasoline engines containing on average an excess of oxygen, wherein the exhaust gases to be purified are passed over an NOₓ adsorption catalyst wherein the regeneration of nitrates, sulfates and particles is achieved by periodically adjusting the mixing ratio of the engine from lean to more stoichiometric ratio such that the λ value is preferably below 1.2 and more preferably below 1.15. For this method, fuel may be injected into the engine or exhaust piping upstream of the NOₓ adsorption catalyst such that the mixing ratio becomes substantially stoichiometric or rich, the λ value then being below 1.1, preferably 1 or below, more preferably between 0.97 and 1.00.

The invention will now be described in more detail with reference to the appended figures wherein
Figure 1shows a system of prior art,
Figure 2 shows a system which may be used with the method of the invention,
Figure 3 shows a second system of prior art,
Figure 4 shows a third system of prior art, and
Figures 5 to 6 are graphical presentations of the results from laboratory tests.

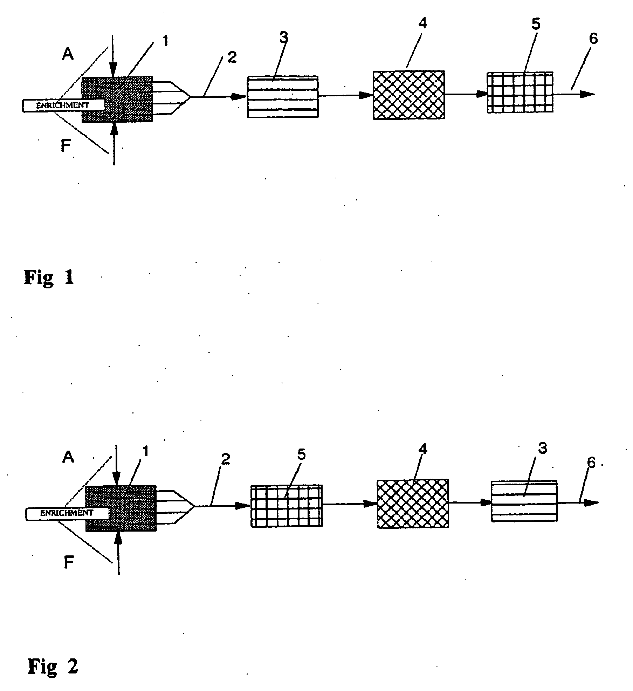

In Figures 1 to 4, A means air and F means fuel.

Figure 1 shows a system of prior art wherein the units are arranged in such an order that the raw exhaust gas 2 from the motor 1 is first passed over the oxidation catalyst 3, then into the particle trap 4, and finally purified exhaust gas 6 exits from the NOₓ adsorption catalyst 5. This system is particularly preferable for the regeneration of soot.

Figure 2 shows system wherein the units are arranged in such an order that the raw exhaust gas 2 from the motor 1 is first passed into the NOₓ adsorption catalyst 5, then into the particle trap 4, and finally purified exhaust gas 6 exits from the oxidation catalyst 3.

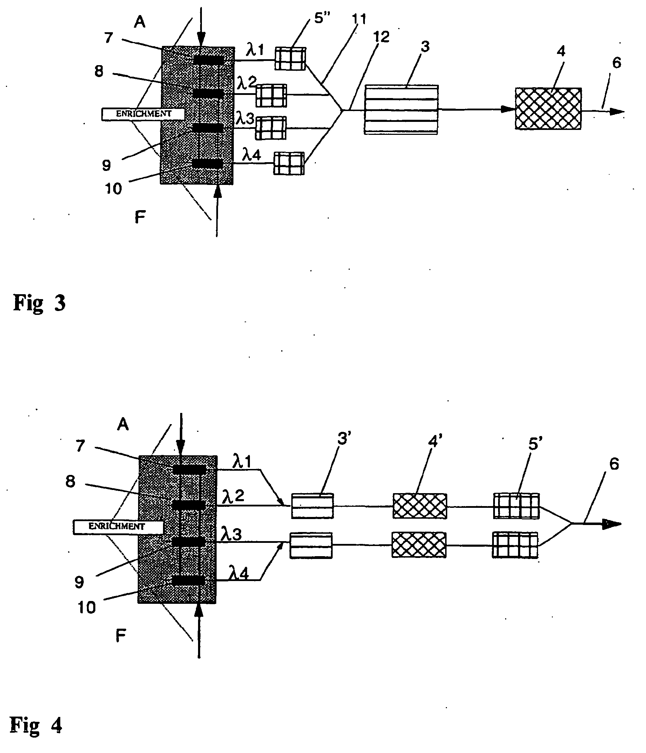

Figure 3 shows a system of prior art wherein each cylinder has its own NOₓ adsorption catalyst. Since it is difficult in diesel engines to provide rich conditions all over the exhaust gas, the latest engine control systems allow for the cylinder specific A/F control to carry out the enrichments periodically in different cylinders at different times relative to each other. In a four-cylinder 7, 8, 9, 10 engine, a separate NOₓ adsorption catalyst 5" is arranged in the exhaust piping in piping from each cylinder. Modern control systems and engines (common trail, turbocharged) make it possible to adjust the λ value separately in each cylinder. Most of the time, the exhaust gas is lean in all cylinders, thus causing the accumulation of nitrogen oxides to the NOₓ adsorption catalyst. Periodically, about very 0.5 to 10 minutes, a cylinder specific enrichment (λ ≤ 1) is carried out to reduce the nitrates in the NOₓ adsorption catalyst to give nitrogen. The enrichment is not carried out simultaneously in all cylinders. Since the cylinders 8 to 10 operating besides the enriching cylinder 7, 11 are lean, the composition of the mixture in the connecting channel 12 after mixing is however lean, this mixture allowing for the operation of the oxidation catalyst 3 while the particle trap 4 collects the solid particles. The amount of soot in exhaust gases of a diesel engine may be controlled considerably better for each cylinder separately compared to the case having the whole mixture enriched. The particle trap 4 is regenerated from soot with NO₂ by allowing the mixture to be poor long enough in all or in some cylinders.

Figure 4 shows a system of prior art having its operational units arranged in two parts in different cylinders 7, 8 and 9, 10, both lines having a complete system including an oxidation catalyst 3', a particle trap 4' and an NOₓ adsorption catalyst 5'. In this case, the volumes of the catalysts and traps may be cut into half, thus making it possible to place them as near to the engine as possible. The enrichment procedure is considerably more easy in two cylinders than in the whole engine, and this way the NOₓ adsorption catalyst may be regenerated to remove the nitrates, sulfates or particles therefrom. In systems having a single cylinder or two cylinders, a diesel engine may be enriched in such a way that the temperature will rise sufficiently to decompose sulfate to form hydrogen sulfide in the rich phase, soot burning after the completed enrichment as the oxygen amount increases abruptly. A corresponding system may be used in lean gasoline applications (GDI) omitting the particle trap and displacing the oxidation catalyst with a three-way catalyst.

With this system it is possible to remove nitrogen oxides in lean conditions and prevent the emissions of deleterious NO₂ being formed in present oxidation catalysts into atmosphere. The object is to reduce nitrogen oxides as λ is lowered during the reduction peak to a level of ≤ 1. Even if the reduction of nitrates should not be succesful in some conditions, decomposing nitrates form and the catalyst desorbs mainly NO instead of NO₂, this being a considerable advantage of the system. As the mixing ratio becomes stoichiometric or near stoichiometric in the NOₓ adsorption catalyst, the decomposition temperature of nitrates will clearly decrease compared to normal diesel conditions, making such a desorption possible. In this case, the temperature will be between 150 and 400 °C, depending on the NOₓ adsorption materials.

Since the combustion of soot requires a high NO₂/C ratio and the selectivity of the reaction is poor, most of the NO₂ passes through the particle trap and is adsorbed on the NOₓ adsorption catalyst in the system of Figure 1. Enrichment peaks may be utilized periodically to raise the temperature, this added heat making it possible to reach the combustion temperature of the particles. As for the combustion of soot, a rich mixture is not preferable, but immediately after the completion thereof the surface temperature of the filter is still high and as the concentration of oxygen in the gas rises quickly, the particles even react with oxygen (> 500 °C) to form gaseous compounds.

By disposing the particle trap closer to the engine, this higher temperature may be utilised to allow the NOₓ adsorption catalyst to operate with as high driving rates as possible (Figure 2). With this system it is possible to obtain enrichment peaks corresponding to an enrichment that is just enough to decompose high amounts of nitrates, to form NO₂ in the oxidation catalyst and to burn particles effectively with a high NO₂/C ratio. In case the particle separator is disposed downstream of the NOₓ adsorption catalyst, NO₂ may be passed to the particle trap by allowing the mixture to be lean long enough for instance during highway cycle.

Soot, C(s), deposited on the particle trap or system is regenerated with a thermal or catalytic reaction wherein NO₂ mainly acts as the oxidating agent in normal exhaust gas:

C(s) + NO₂ → COₓ(g) + NO(g) (+ N₂(g)) >230 °C

C(s) + O₂ → COₓ(g) >500 °C

oxygen and NO₂ being in the gas phase or adsorbed on the surfaces.

In this system, the particle trap may be any filter or a system separating particles made of ceramics, SiC or metal. The separator may have a honeycomb, rod, foam, porous plate, wire mesh, sound insulation structure or cyclone type structure. The particle separator is a site where the particles stay long enough to undergo oxidation to carbon dioxide and water. It is possible to enhance the separation capacity with electrostatical means and the combustion with an additional heat source (burners, electrical heating). In the system, fuel or exhaus gas additives catalyzing the combustion of soot may be used to lower the ignition temperature thereof. The particle trap may also be coated with an oxidation and/or NOₓ adsorption catalyst to achieve a compact structure. The particle separator may be coated at the inlet side with an oxidation catalyst and at the outlet side with an NOₓ adsorption catalyst. The difficulty in this case may be the geometric surface area that is too small for the catalyst material.

With a cylinder specific NOₓ adsorption catalyst, the applicability of lean engines will increase despite the fact that the number of the separate operational units present in the system is higher thus making it especially expensive. Experience shows that the enrichment of diesel engines is difficult, the problems being combustion disturbances and the strong formation of particles. By enriching only one cylinder at a time clearly less enrichment is needed, and as hydrocarbon, CO, hydrogen and particles are mixed up with the exhaust gas from other cylinders, an excess thereof undergoes thermal burning in the oxidation catalyst and particle separator. A particle separator disposed upstream of the NOₓ adsorption catalyst removes the particles being formed and only gaseous reducing agents such as CO, hydrogen ja hydrocarbons pass to the NOₓ adsorption catalyst during the enrichment peak. As for the particle separator, it is regenerated by the NO₂ as the mixture becomes lean again.

With a cylinder specific NOₓ adsorption catalyst, it is much easier to remove the accumulated sulfates than by using the whole system, since the enrichment in one cylinder does not interfere with the operation of the engine nor driving quality compared to situation where the whole exhaust gas would be enriched. A temperature of above 600 °C in reducing conditions during a sufficiently long period may be necessary to decompose stable sulfates (such as BaSO₄). As the enrichment is carried out in a single cylinder line at a time, the desorbing H₂S will undergo a thermal reaction or a reaction on the catalyst surface in the exhaust gas containing excess of oxygen to form again SO₂ having less odour than hydrogen sulfide. If the temperature (11) of the exhaust gas of the cylinder being enriched (figure 3) is sufficiently high for the decomposition of sulfates, then the temperature in the pooled exhaust gas 12 will also be sufficiently high to allow hydrogen sulfide to react in the oxidation catalyst to give SO₂. The duration of the enrichment peaks is normally very short, from 0.5 to 1 s, the duration of the lean phase being for instance from 15 to 180 s. In this method presented it is of course possible to change the lean/rich phase duration ratio, if necessary.

Temperatures of diesel exhaust gases are lowered with the increasingly improving efficiencies of new engine types. Cylinder specific catalysts may be placed closer to the engine and the diameter of the catalyst remains more reasonable than in cases where the exhaust gases of all cylinders would pass through a single catalyst. In case a four-cylinder car needs an NOₓ adsorption catalyst of a total volume of 2.0 liters, then alternatively a catalyst of about 0.5 liters may be placed to each cylinder. The fact that each catalyst receives the exhaust gas from a single cylinder allows the diameter of the catalyst to be clearly smaller than for instance for a starter catalyst of similar size, through which the whole exhaust gas passes.

As two separate pipings are used for instance in an engine having 4 or 6 cylinders, they may be used separately as complete systems. In this case the enrichment for decomposing nitrates, combustion of particles and decomposing of sulfates may be carried out much easier than in the whole system. Nitrates are already reduced at very low temperatures (even below 200 °C). It is only important to provide reducing conditions. Low NOₓ concentrations in raw emissions will bring about a low NO₂/C ratio, and accordingly additional heat from the enrichments carried out in the system is necessary to burn the particles deposited on the filter. The temperature requirement for the removal of sulfates in normal NOₓ adsorption catalyst is most critical, making it necessary to raise the temperature to at least above 300 °C, normally above 600 °C. The division into two lines may be a critical factor making the system applicable in a diesel engine owing to driving qualities and even running of the engine thus attained.

It is also possible that the systems have different sizes for passing the exhaust gases of one cylinder into one system and the exhaust gases of the other cylinders into another, larger system. In this case one system may be very small. The operative units may be connected together in parallel in many combinations of the alternatives shown.

The problem in the more developed direct injection gasoline engines has been the increase of the particle emissions. More particles than in a normal gasoline engine emission may be formed in the combustion chamber both in lean and rich conditions. The method of the invention may also be used in such applications, the removal of particles and sulfates from the system being faster due to higher temperatures, often during normal driving. A simple particle separator could prevent the instantaneously forming particles from escaping into atmosphere.

Since it is more difficult to carry out the enrichment (λ < 1) in a diesel engine than in a gasoline engine, the mixing ratio in a diesel engine may be adjusted close to stoichiometric conditions allowing the engine to be run normally a short period of time. Nitrates accumulated on the NOₓ adsorption catalyst may be regenerated by injecting at the same time additional fuel into the exhaust gas (exhaust piping or post injection cylinders). In this manner, the NOₓ emissions of the engine are kept lower than in engine enrichments (λ ≤ 1). Raw emissions of NOₓ formed during combustion increase compared to lean when passing to stoichiometric and rich mixtures. The NOₓ conversion requirement becomes higher as the raw emissions increase during the enrichments. Raw emissions of the nitrogen oxides and particles may be kept reasonable by running the diesel engine instantaneously close to stoichiometric, but still clearly in lean conditions. At that moment the enrichment to obtain reducing conditions is accomplished with a fuel injection. As for the reducing power, it may be necessary with this method to aim at a longer enrichment peak, since λ is closer to 1 than in the method described earlier. Reducing power depends on the duration of the enrichment phase, the deviation from the stoichiometric mixture and the composition of the reducing agent.

Additional fuel injection may be carried out at a different moment than the engine enrichment to be slighly lean. This additional injection to make the enrichment more effective may be carried out slighly before or after the engine enrichment. It may for instance be preferable to carry out this injection before the engine enrichment since in a mixture still clearly lean, the fuel is cracked to form reactive compounds at a lower temperature compared to feeding it to a nearly stoichiometric mixture. This may be optimized for instance relative to the temperature and reducing power. The additional injection may also be carried out by feeding the fuel into the system immediately upstream of the NOₓ adsorption catalyst. S regeneration may also be carried out with this method or by using a longer lasting and richer enrichment. According to thermodynamic calculations, the decomposition temperature of nitrates is clearly lower close to a stoichiometric mixture at lean without an additional injection, and thus in normal driving conditions NO is desorbed from the NOₓ adsorption catalyst. This NO is an emission less harmful to the environment than NO₂ formed in normal Pt oxidation catalysts. Continuous or instantaneous enrichment may not be carried out reasonably in a diesel engine with a fuel injection since during normal driving the exhaust gas contains 5 to 16 % of oxygen. In this case the amount of fuel needed would be so high to consume this oxygen completely before the nitrogen oxides even start to oxidize properly. Such a high hydrocarbon amount will not burn properly at the catalysts and moreover, the fuel consumption caused by the injection and the risk of emissions would be too high.

As the system was developed, also a S regeneration method for the NOₓ adsorption catalyst was found. In this method, instead of the conventionally long reducing treatment, the S regeneration was carried out in heterogeneous lean-rich conditions corresponding to the normal lean-rich timing and conditions of the system during normal driving except for the temperature that must be raised to a level required by the catalysts for the decomposition of sulfates. Compared to the lean phase, short duration of the enrichment phase is characteristic. S regeneration should be carried out in a situation having anyway a high temperature due to the driving cycle, for instance during freeway driving. Additional heat is obtained by modifying the lean phase mixture closer to a stoichiometric mixture.

The invention is now illustrated by means of a example relative to laboratory tests already carried out.

An oxidation catalyst, NOₓ adsorption catalyst and a particle separator, i.e. a particle trap described below in more detail were used in comparative systems.

Used oxidation catalyst was an oxidation catalyst developed for diesel conditions, comprising a support material with a specific surface area of above 200 m²/g before use, the amount of the support material being 50 m²/g on a thin 50 µm metal foil. The cell density was 400 cells/in². The support material contained about 1,4 % of Pt, the catalyst thus being highly active relative to both the oxidation of CO/HC and the NO₂ formation from NO necessary for the oxidation of soot in diesel conditions. Small amounts of nitrogen oxides were also reduced in diesel conditions between temperatures 150 and 280 °C at this Pt-catalyst.

The support material of the alumina based NOₓ adsorption catalyst contained 10 % Ba, 9 % La, 17 % Ce, 3 % Zr, 1,8 % K, 1,2 % Mg ja 2,4 % Pt. The cell density was 500 cells/in², the thickness of the metal foil being 50 µm.

The ceramic honeycomb like particle trap used in these tests had about 110 cells/in². In this honeycomb, one end of the cells was always closed to pass the gas through a porous wall permeable to exhaust gases. The size of the cells was, however, so small that the particles were trappes at the inlet side of the filter with a degree of separation of above 80 %. The pressure drop increases with the increasing amount of the particles, thus making it necessary to remove the soot accumulated on the filter by combustion.

The operation of the system was simulated in laboratory conditions simulating the exhaust gases of engines using diesel fuel driven on an average in lean conditions. In these exhaust gases, short controlled enrichments are carried out to reduce the adsorbed NOₓ. Although no particles were fed into the inlet nor the separating power was measured, the purpose of this simulation was to determine how a particle separator used in a normal passenger car influences the flows and heating of the enrichment peaks. This simulation is also comparable to simulations carried out with an engine since the reaction of particles with NO₂ hardly consumes NO₂ without influencing the concentrations entering the NOₓ adsorption catalyst.

The endurance in real conditions being a problem, the acitivities of the samples were measured after the samples were first hydrothermally aged (10 % water in air, space velocity about 4000 h⁻¹ in a sample) at 700 °C for 20 hours. In this way a result corresponding to operation in real demanding exhaust gases. The composition at the inlet of a laboratory tube reactor was adjusted with computerized control means for the mass flow rate, analyzing the composition with continuous NOₓ, CO, HC and O₂ analyzers. The conditions in the laboratory apparatus were as shown in Table 1 below.

**Table 1**

| Gas compositions used in laboratory simulation at the inlet | | | | |
|---|---|---|---|---|
| Compound | Lean 1 | Rich 1 | Lean 2 | Rich 2 |
| NO, ppm | 500 | 1500 | 500 | 500 |
| C₃H₆, ppm | 500 | 1000 | 1000 | 3330 |
| CO, % | 0.05 | 6 | 0.1 | 1.0 |
| H₂, % | 0.04 | 2 | 0.3 | 0.8 |
| O₂, % | 7 | 0.8 | 1.8 | 1.8 |
| H₂O, % | 10 | 10 | 10 | 10 |
| CO₂, % | 10 | 10 | 10 | 10 |
| SO₂, % | 0/25 | 0/25 | 0 | 0 |
| N₂, % | balance | balance | balance | balance |
| λ | 1.45 | 0.84 | 1.08 | 0.99 |
| Time, s | 60 | 5 | 5 | 5 |

| | | | | |
|---|---|---|---|---|
| The exhaust gases simulate the following conditions in diesel exhaust gases: Lean 1: normal diesel exhaust gas at lean Rich 1: instantaneous enrichment of a diesel engine to be clearly rich (λ < 1) Lean 2: mixing ratio of a diesel engine changed to be nearly stoichiometric, however clearly lean. Rich 2: mixing ratio in exhaust gas changed to be slightly rich from the Lean 2 conditions by post injecting fuel into the exhaust gas | | | | |

Mean activities were measured during 5 cycles between 150 and 600 °C, with increments of 50 °C.

### Example 1

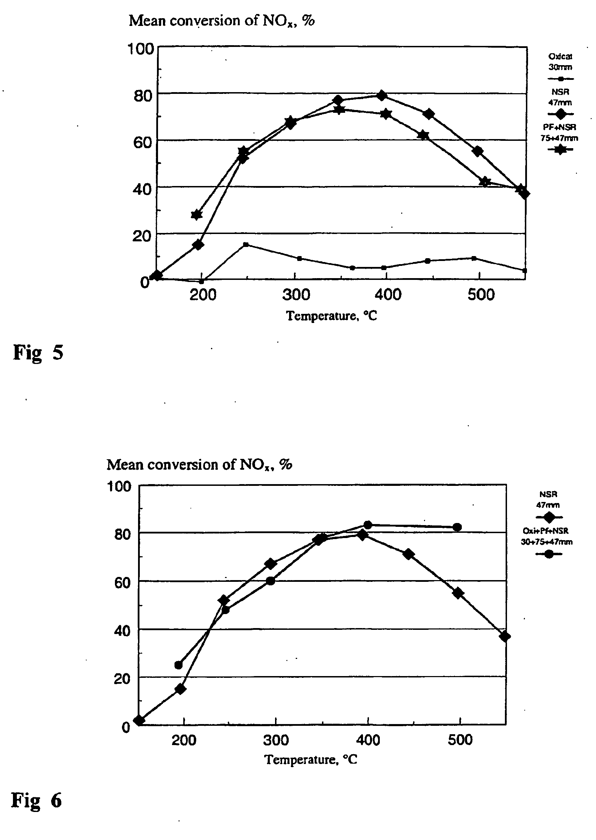

In laboratory, cyclic activity tests were carried out at constant temperature by passing the lean mixture 1 of Table 1 during 60 s and rich mixture 1 of Table 1 were passed into the reactor. The results are shown in Figures 5 and 6, the operational units being designated as follows: Oxicat = oxidation catalyst (length 30 mm, space velocity 75 000 h⁻¹), PF = particle separator (length 75 mm, space velocity 30 000 h⁻¹), and NSR = NOₓ adsorption catalyst (length 47 mm, space velocity 48 000 h⁻¹). The lengths and space velocities of the samples are selectes according to normal conditions prevailing in diesel exhaust gas and at NOₓ adsorption catalyst, the adsorption capasity, oxidation efficiency and flow dynamics thus corresponding to real exhaust gas conditions.

In the first test series, with results presented in Figure 5, an oxidation catalyst (comparative), NOₓ adsorption catalyst (comparative), and a system having the particle separator and the NOₓ adsorption catalyst arranged in series were used. The results show that the Pt oxidation catalyst is not effective alone but the NOₓ adsorption catalyst is needed to obtain higher NOₓ conversion in a cycle of this type. The disposal of the particle separator upstream does not interfere with the NOₓ adsorption and passage of the enrichment peaks to the NOₓ adsorption catalyst. A NOₓ conversion of 40 % is already attained at 200 °C. In this simulation, maximum conversions were above 80 %.

In the second test series, with results presented in Figure 6, a system was used, having the oxidation catalyst, the particle separator, and the NOₓ adsorption catalyst arranged in this order in series. In this test, the system works fine, and surprisingly, increasingly improving operation is attained compared to the system without Pt oxidation catalyst. This result shows that the disposal of the oxidation catalyst as the first unit in flow direction will not prevent the NOₓ adsorption or reduction. The oxidation catalyst is selected on purpose to be relatively small in comparison with the PF and NOₓ adsorption catalyst in order not to prevent the further passage of the reducing agents due to adsorption for the enrichment period used.

In the system of Figures 5 and 6, the NOₓ conversion was lowered as 25 ppm of SO₂ was continuously present for a long time. It was possible to regenerate the systems completely in the operating conditions, at above 600 °C. The results in Figures 5 and 6 are from measurements with a system regenerated once, showing the resistance to sulfates of the NOₓ adsorption catalysts and the whole system, as well as the the effectiveness of S regeneration. The S regeneration was carried out unig a gas mixture and periods of 60 s for lean 1 mixture and 5 s for rich 1 mixture. The regeneration was thus carried out in exhaust gas conditions corresponding to the normal use thereof, the best NOₓ adsorption catalysts still working with a conversion of above 30 %. Normally, the S conversion is carried out by using a long reducing period, the risk being then a high H₂S concentration in the exhaust gas. This regeneration test showed the effectivity of the method. Hydrogen sulfide emissions may be decreased only by using a reductive treatment and heterogeneous conditions in S regeneration. In heterogeneous conditions, a characteristic feature of the S regeneration is the short duration of the enrichment phase compared to lean phase. Should the NOₓ adsorption catalyst used require a high S regeneration temperature, it is preferable to raise the temperature probably by modifying the lean phase mixture closer to stoichiometric, to a level sufficient for the decomposition of sulfates.

### Example 2

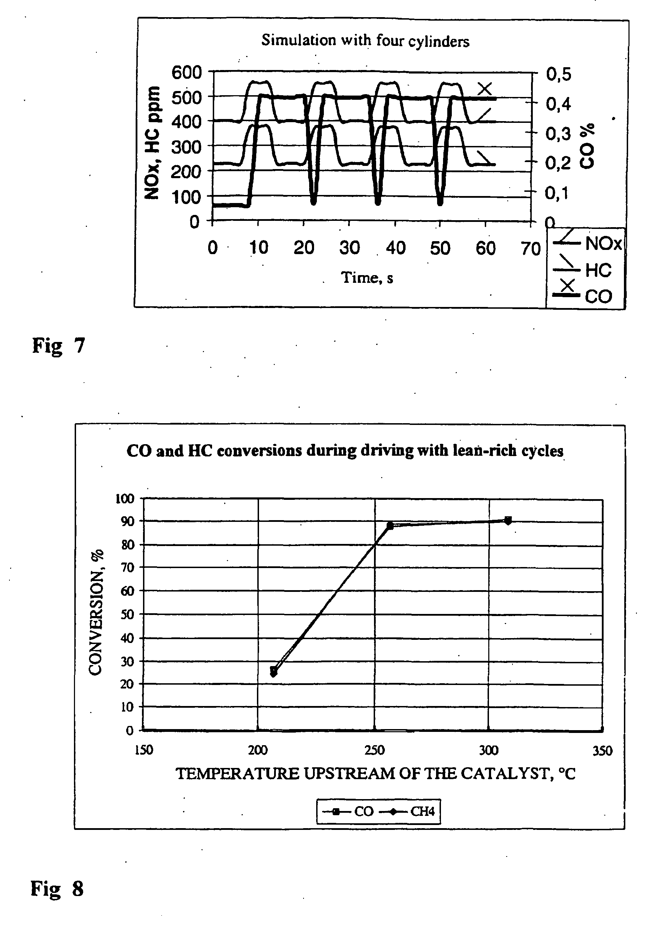

This example simulates the situation of Figure 3, having four NOₓ adsorption catalysts, one for each cylinder. It is supposed that the space velocity in each of the catalysts has the same value of 48 000 h⁻¹ as in case using only one catalyst for the total exhaust gas. At 11, the CO, HC, NOₓ and O₂ concentrations were analysed at the outlet of a single NSR catalyst, at 200, 250 and 300 °C. A situation was simulated wherein the cylinders were synchronized for one minute to circulate a 5 second enrichment phase (λ = 0.865) among different cylinders uniformly whereas the other cylinders are in a lean phase (λ = 1.447). In this manner, the composition of the exhaust gas of Figure 7 was obtained (λ = 1.30) at 12 before the oxidation catalyst. This gas mixture was used for the simulation of the input gas to determine how the oxidation catalyst works in a pooled exhaust gas, the space velocity being 75 000 h⁻¹. HC and CO were ignited at about 225 °C, the HC concentrations being below 100 ppm and the CO concentrations being below 500 ppm in the simulated mixture at 250 °C. The results are shown in Figure 8. The simulation showed how the gaseous CO and HC emissions may be kept low in the system if the cylinders are in the enrichment phase synchronized at different times. The result suggests that the same advantages may also be attained for the reduction of particle emissions. The NOₓ conversions would also be as shown in Figure 6 or even slightly better since with this simulated gas mixture, the NOₓ conversions were still 10 to 20 % at the Pt oxidation catalyst, at 200 to 300 °C. This NOₓ conversion may be added to the conversion level of the NOₓ adsorption catalyst.

### Example 3

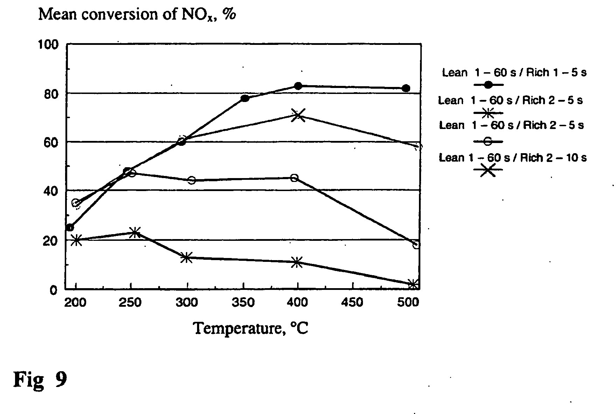

Enrichment in a diesel engine close to a stoichiometric composition and a simultaneous enrichment with a fuel injection were simulated with a laboratory reactor, using mixture of Table 1. A system was used having an oxidation catalyst (Oxicat, 30 mm), a particle separator (PF, 75 mm), and an NOₓ adsorption catalyst (NSR, 47 mm) arranged in series in this order. In the first simulation, the mixture varied betweent lean 1 and lean 2 with timing 60 s / 5 s, respectively. In the second simulation, the mixture varied betweent lean 1 and rich 2 with timing 60 s / 5 s, respectively, and in the third simulation the duration of the rich 2 phase was increased to 10 seconds. In the mixtures, the enrichment with a fuel injection was simulated to obtain clearly more hydrocarbons relative to CO and hydrogen than in the engine enrichment case (rich 1). The results are shown in Figure 9.

This simulation showed that the additional injection (lean 1 / rich 2) brought about a clear improvement in comparison with the situation without an additional injection (lean 1 / lean 2). NOₓ conversion improved at 250 to 300 °C from about 20 % to nearly 50 % although the duration of the reducing peak was 5 seconds and the mixture was only slightly rich (λ = 0.99). The NOₓ conversion was above 40 % between 220 and 410 °C. The conditions used in simulation were reasonable with respect to the operation of the engine and the increased consumption of fuel. This result also shows the difference to the continuous NOₓ reduction with hydrocarbons since the operation window of the Pt catalysts is narrow between 200 and 300 °C. The operation level was clearly lower at higher temperatures than in the case of a higher enrichment (rich 1 mixture, λ = 0.86), but this exemplary realization is a new possibility that may be carried out more easily in an engine than Example 1. By increasing the enrichment time with a HC injection (rich 2 mixture), the operation was improved significantly. It is probable that the operation level may still be improved by optimizing the conditions (duration of the enrichment and the λ value).

## Claims

1. Method for purifying exhaust gases of diesel or gasoline engines containing on average an excess of oxygen, **characterized in that** the exhaust gases to be purified are passed through a System for purifying exhaust gases of diesel or gasoline engines containing on average an excess of oxygen, which system includes a combination of three operational units being an oxidation catalyst effective to promote oxidation of at least NO to NO₂ (3), a particle separator (4), and an NOₓ adsorption catalyst (5, 5"),and
the order in said combination of the three operational units, in flow direction of the exhaust gas, is as follows: said NOₓ adsorption catalyst (5, 5") is arranged before said oxidation catalyst effective to promote oxidation of at least NO to NO₂ (3), or said NOₓ adsorption catalyst (5, 5") is arranged in the same structure with said oxidation catalyst (3); and that in said system:
the order of the operational units in flow direction of the exhaust gas is as follows:
an NOₓ adsorption catalyst (5), a particle separator (4), and an oxidation catalyst (3),
and that the NOₓ adsorption catalyst and the particle separator are disposed in the same structure,
this system reducing the amounts of hydrocarbons, carbon monoxide, nitrogen oxides and particles present in exhaust gas, wherein said NOₓ adsorption catalyst (5, 5") contains as a catalytic metal platinum and/or rhodium and at least one of the following elements: Ba, Sr, La, Y, Ce, Zr, and possibly at least one of the following elements: Li, Na, K, Rb, Cs, Be, Mg, Ca, **characterized in that** a mixing ratio of the engine is periodically adjusted from a lean mixing ratio to a more stoichiometric or rich mixing ratio with a J value below 1.2.

2. Method of Claim 1, **characterized in that** in the system the oxidation catalyst and the particle separator are disposed in the same structure.

3. Method of Claim 1, **characterized in that** in the system the NOₓ adsorption catalyst and oxidation catalyst are disposed in the same structure with the particle separator.

4. Method of any of the above Claims, **characterized in that** in the system the oxidation catalyst (3) contains platinum and/or palladium as catalytic metal(s).

5. Method of Claim 1, **characterized in that** the system includes NOₓ adsorption catalysts that are arranged in each exhaust gas discharge line of each cylinder or in each of the exhaust gas discharge lines of two cylinders.

6. Method of any of the above Claims, **characterized in that** in the system the regeneration of the NOₓ adsorption catalyst sulfates, the reduction of nitrates and burning of particles is accomplished by periodically using a lean mixture and a rich mixture.

7. Method of Claim 6, **characterized in that** in the system the ratio of the duration of the lean phase to that of the rich phase is more than 3, preferably more than 10.

8. Method of Claim 1, **characterized in that** a lean mixture and a rich mixture are periodically used, the ratio of the duration of the lean phase to that of the rich phase being more than 3, preferably more than 10.

9. Method of Claim 1 or 8, **characterized in that** enrichments with variable durations are used for the regeneration of nitrates, sulfates and particles such that said regenerations of sulfates and particles preferably last longer than the regeneration of nitrates.

10. Method of Claim 1, **characterized in that** the exhaust gases to be purified are passed over an NOₓ adsorption catalyst allowing for the regeneration of sulfates with a lean-rich mixture, the ratio of the duration of the lean phase to that of the rich phase being more than 3, preferably more than 10.

11. Method of any of Claims 1 or 8 to 10, **characterized in that** the exhaust gases to be purified are passed over an NOₓ adsorption catalyst wherein the regeneration of nitrates, sulfates and particles is achieved by periodically adjusting the mixing ratio of the engine from lean to a ratio closer to stoichiometric, λ value being preferably below 1.2 and more preferably below 1.15.

12. Method of Claim 11, **characterized in that** fuel is injected into the engine to obtain a substantially stoichiometric or rich mixing ratio, the λ value being thus below 1.1, preferably 1 or below, more preferably between 0.97 and 1.00.

## Patentansprüche

1. Verfahren zur Reinigung von Abgasen von Diesel- oder Benzinmotoren, enthaltend im Mittel einen Überschuss an Sauerstoff, **dadurch gekennzeichnet, dass** die zu reinigenden Abgase durch ein System geleitet werden zur Reinigung von Abgasen aus Diesel- oder Benzinmotoren, enthaltend im Mittel einen Überschuss an Sauerstoff, wobei das System eine Kombination aus wenigstens drei Betriebseinheiten einschließt, die ein Oxidationskatalysator, der zur Beschleunigung der Oxidation von wenigstens NO zu NO₂ (3) wirksam ist, ein Partikelseparator (4), und ein NOₓ-Adsorbtionskatalysator (5, 5") sind, und
wobei die Reihenfolge dieser Kombination der drei Betriebseinheiten in der Flussrichtung des Abgases wie folgt ist: der NOₓ-Adsorbtionskatalysator (5, 5") ist vor dem Oxidationskatalysator angeordnet, welcher wirksam ist, um die Oxidation von wenigstens NO zu NO₂ (3) zu unterstützen, oder der NOₓ Adsorbtionskatalysator (5, 5") ist in der gleichen Struktur mit dem Oxidationskatalysator (3) angeordnet, und wobei in dem System:
die Reihenfolge der Betriebseinheiten in Flussrichtung des Abgases wie folgt ist:
ein NOₓ Adsorbtionskatalysator (5), ein Partikelseparator (4) und ein Oxidationskatalysator (3),
und dass der NOₓ-Adsorbtionskatalysator und der Partikelseparator in der gleichen Struktur angeordnet sind,
wobei das System die Mengen an Kohlenwasserstoffen, Kohlenmonoxid, Stickstoffoxiden und Partikeln reduziert, die in dem Abgas vorhanden sind, wobei der NOₓ-Adsorbtionskatalysator (5, 5") als ein katalytisches Metall Platin und/oder Rhodium enthält und wenigstens eines der folgenden Elemente: Ba, Sr, La, Y, Ce, Zr und möglicherweise wenigstens eines der folgenden Elemente: Li, Na, K, Rb, Cs, Be, Mg, Ca, **dadurch gekennzeichnet, dass** ein Mischverhältnis des Motors periodisch von einem mageren Mischverhältnis zu einem stöchiometrischeren oder fetteren Mischverhältnis mit einem λ-Wert unter 1,2 eingestellt wird.

2. Verfahren nach Anspruch 1, **dadurch gekennzeichnet, dass** in dem System der Oxidationskatalysator und der Partikelseparator in der gleichen Struktur angeordnet sind.

3. Verfahren nach Anspruch 1, **dadurch gekennzeichnet, dass** in dem System der NOₓ-Adsorbtionskatalysator und der Oxidationskatalysator in der gleichen Struktur mit dem Partikelseparator angeordnet sind.

4. Verfahren nach einem der obigen Ansprüche, **dadurch gekennzeichnet, dass** in dem System der Oxidationskatalysator (3) Platin und/oder Palladium als katalytisches Metall (katalytische Metalle) enthält.

5. Verfahren nach Anspruch 1, **dadurch gekennzeichnet, dass** das System NOₓ-Adsorbtionskatalysatoren umfasst, die in jeder Abgasentladungsleitung jedes Zylinders, oder in jeder der Abgasentladungsleitungen von zwei Zylindern angeordnet sind.

6. Verfahren nach einem der obigen Ansprüche, **dadurch gekennzeichnet, dass** in dem System die Regeneration der Sulfate des NOₓ-Adsorbtionskatalysators, die Reduktion der Nitrate und das Verbrennen der Partikel durchgeführt wird, in dem periodisch eine magere Mischung und eine fette Mischung verwendet wird.

7. Verfahren nach Anspruch 6, **dadurch gekennzeichnet, dass** in dem System das Verhältnis der Dauer der mageren Phase zu der Dauer der fetten Phase mehr als 3 beträgt, vorzugsweise mehr als 10.

8. Verfahren nach Anspruch 1, **dadurch gekennzeichnet, dass** eine magere Mischung und eine fette Mischung periodisch verwendet werden, wobei das Verhältnis der Dauer der mageren Phase zu der Dauer der fetten Phase mehr als 3, vorzugsweise mehr als 10 beträgt.

9. Verfahren nach Anspruch 1 oder 8, **dadurch gekennzeichnet, dass** Anreicherungen mit variablen Dauern zur Regeneration von Nitraten, Sulfaten und Partikeln so verwendet werden, dass die Regenerationen der Sulfate und Partikel vorzugsweise länger andauern als die Regeneration der Nitrate.

10. Verfahren nach Anspruch 1, **dadurch gekennzeichnet, dass** die zu reinigenden Abgase über einen NOₓ-Absorbtionskatalysator geleitet werden, welcher die Regeneration der Sulfate mit einer mageren - fetten Mischung ermöglicht wird, wobei das Verhältnis der Dauer der mageren Phase zu der Dauer der fetten Phase mehr als 3, vorzugsweise mehr als 10 beträgt.

11. Verfahren nach einem der Ansprüche 1 oder 8 bis 10, **dadurch gekennzeichnet, dass** die zu reinigenden Abgase über einen NOₓ-Adsorbtionskatalysator geleitet werden, wodurch die Regeneration der Nitrate, Sulfate und Partikel erzielt wird, durch das periodische Einstellen des Mischverhältnisses des Motors von einem mageren Verhältnis zu einem Verhältnis näher an dem stöchiometrischen Verhältnis, wobei der λ-Wert vorzugsweise unter 1,2 und noch bevorzugter unter 1,15 liegt.

12. Verfahren nach Anspruch 11, **dadurch gekennzeichnet, dass** der Kraftstoff in den Motor eingeführt wird, um ein im Wesentlichen stöchiometrisches oder fettes Mischverhältnis zu erzielen, wobei der λ-Wert daher unter 1,1 liegt, vorzugsweise 1 oder darunter, noch bevorzugter zwischen 0,97 und 1,00.

## Revendications

1. Procédé de purification des gaz d'échappement d'un moteur essence ou diesel contenant en moyenne un excédent d'oxygène, **caractérisé par le fait que** les gaz d'échappement à purifier sont passés à travers un système de purification des gaz d'échappement d'un moteur essence ou diesel contenant en moyenne un excédent d'oxygène, ledit système comprenant une combinaison de trois unités opérationnelles consistant en un convertisseur catalytique à oxydation, utilisé pour favoriser l'oxydation d'au moins le NO en NO₂ (3), un séparateur de particules (4) et un catalyseur d'adsorption de NOₓ (5, 5"), les trois unités opérationnelles étant combinées dans l'ordre suivant, dans le sens d'écoulement du gaz d'échappement: ledit catalyseur d'adsorption de NOₓ (5, 5") placé avant ledit convertisseur catalytique à oxydation destiné à favoriser l'oxydation d'au moins le NO en NO₂ (3), ou bien ledit catalyseur d'adsorption de NOₓ (5, 5") disposé dans la même structure que ledit convertisseur catalytique à oxydation (3); et dans ledit système:
l'ordre des unités opérationnelles dans le sens d'écoulement du gaz d'échappement est le suivant:
un catalyseur d'adsorption de NOₓ (5), un séparateur de particules (4) et un convertisseur catalytique à oxydation (3),
et que le catalyseur d'adsorption de NOₓ et le séparateur de particules sont disposés dans la même structure,
ce système réduisant les quantités d'hydrocarbure, de monoxyde de carbone, d'oxydes d'azote et de particules présents dans le gaz d'échappement, ledit catalyseur d'adsorption de NOₓ (5, 5") contenant, comme métal catalytique, du platine et/ou du rhodium et au moins un des éléments suivants: Ba, Sr, La, Y, Ce, Zr et éventuellement l'un des éléments suivants: Li, Na, K, Rb, Cs, Be, Mg, Ca, **caractérisé par le fait qu'**un rapport de mélange du moteur est régulièrement ajusté à partir d'un rapport de mélange pauvre vers un rapport de mélange plus stoechiométrique ou riche, avec une valeur λ inférieure à 1,2.

2. Procédé selon la revendication 1, **caractérisé par le fait que** dans le système le convertisseur catalytique à oxydation et le séparateur de particules sont disposés dans la même structure.

3. Procédé selon la revendication 1, **caractérisé par le fait que** dans le système le catalyseur d'adsorption de NOₓ et le convertisseur catalytique à oxydation sont disposés dans la même structure, avec le séparateur de particules.

4. Procédé selon l'une quelconque des revendications précédentes, **caractérise par le fait que** dans le système le convertisseur catalytique à oxydation (3) contient du platine et/ou du palladium, comme métaux catalytiques.

5. Procédé selon la revendication 1, **caractérisé par le fait que** le système inclut des catalyseurs d'adsorption de NOₓ disposés dans chaque ligne d'évacuation des gaz d'échappement de chaque cylindre ou dans chacune des lignes d'évacuation des gaz d'échappement de deux cylindres.

6. Procédé selon l'une quelconque des revendications précédentes, **caractérisé par le fait que** dans le système la régénération des sulfates du catalyseur d'adsorption de NOₓ, la réduction des nitrates et la combustion des particules sont accomplies en utilisant périodiquement un mélange pauvre et un mélange riche.

7. Procédé selon la revendication 6, **caractérisé par le fait que** dans le système le rapport de durée de la phase pauvre par rapport à la phase riche est supérieur à 3, et de préférence supérieur à 10.

8. Procédé selon la revendication 1, **caractérisé par le fait qu'**un mélange pauvre et un mélange riche sont utilisés périodiquement, le rapport de durée de la phase maigre par rapport à celle de la phase riche étant supérieur à 3, et de préférence supérieur à 10.

9. Procédé selon la revendication 1 ou 8, **caractérisé par le fait que** des enrichissements de durées variables sont utilisés pour la régénération des nitrates, des sulfates et des particules, de sorte que lesdites régénérations de sulfates et de particules durent de préférence plus longtemps que la régénération des nitrates.

10. Procédé selon la revendication 1, **caractérisé par le fait que** les gaz d'échappement à purifier sont passés dans un catalyseur d'adsorption de NOₓ, permettant la régénération des sulfates avec un mélange pauvre-riche, le rapport de durée de la phase pauvre par rapport à la phase riche étant supérieur à 3, et de préférence supérieur à 10.

11. Procédé selon l'une quelconque des revendications 1 or 8 à 10, **caractérisé par le fait que** les gaz d'échappement à purifier sont passés dans un catalyseur d'adsorption de NOₓ, dans lequel la régénération des nitrates, des sulfates et des particules est obtenue en ajustant périodiquement le rapport de mélange du moteur, depuis un mélange pauvre vers un rapport plus stoechiométrique, la valeur λ étant de préférence inférieure à 1,2 et, de préférence encore, inférieure à 1,15.

12. Procédé selon la revendication 11, **caractérisé par le fait que** le carburant est injecté dans le moteur pour obtenir un rapport de mélange substantiellement stoechiométrique ou riche, la valeur λ étant ainsi inférieure à 1,1, de préférence 1 ou moins, et encore de préférence entre 0,97 et 1,00.
